(19) Europäisches Patentamt
European Patent Office
Office européen des brevets

(11) **EP 4 098 341 A1**

(12) **EUROPEAN PATENT APPLICATION**
published in accordance with Art. 153(4) EPC

(43) Date of publication:
**07.12.2022 Bulletin 2022/49**

(21) Application number: **21747406.3**

(22) Date of filing: **27.01.2021**

(51) International Patent Classification (IPC):
**B01D 21/01** (2006.01)     **C02F 1/52** (2006.01)
**C02F 1/56** (2006.01)

(52) Cooperative Patent Classification (CPC):
**B01D 21/01; C02F 1/52; C02F 1/56**

(86) International application number:
**PCT/JP2021/002737**

(87) International publication number:
**WO 2021/153579 (05.08.2021 Gazette 2021/31)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **31.01.2020 JP 2020014854**

(71) Applicant: **Kao Corporation
Chuo-ku
Tokyo 103-8210 (JP)**

(72) Inventors:
• **KOJIMA Hironori**
  **Wakayama-shi, Wakayama 640-8580 (JP)**
• **FUKUDA Masaya**
  **Wakayama-shi, Wakayama 640-8580 (JP)**
• **ISHIZUKA Hitoshi**
  **Tokyo 103-8210 (JP)**

(74) Representative: **Hoffmann Eitle
Patent- und Rechtsanwälte PartmbB
Arabellastraße 30
81925 München (DE)**

(54) **WATER TREATMENT AGENT**

(57)     The present invention is a water treatment agent containing (a) a polyalkylene oxide with a weight average molecular weight of 500,000 or more and (b) an inorganic flocculating agent.

**Description**

Field of the Invention

The present invention relates to a water treatment agent and a method for purifying water.

Background of the Invention

Securing safe water is one of the most important activities in general life. Developed countries have well-developed infrastructure relating to water utilization. Under present circumstances, however, there are still many areas on the earth that do not have access to sufficient water, and people living in such areas are forced to work very hard to secure water. Therefore, there is a strong need for technologies that can easily purify sludge or other polluting components existing in river water, lake water, groundwater, rainwater or the like.

JP-A S48-102080 discloses a method of clarifying surfactants, water containing suspended solids comprising adding to said water from about 0.1 ppm to about 20 ppm of a solution of a mixture of a cationic polymer and a nonionic polymer in a weight ratio of from 5 to 1 to 20 to 1.

JP-A S51-148967 discloses a method for treating high turbidity wastewater comprising, adding an organic flocculating agent, an inorganic flocculating agent and an organic flocculating agent to the wastewater in this order to flocculate solid particles suspended therein.

JP-A S56-21609 discloses a flocculating agent composition comprising as essential components (A) a polysaccharide, (B) a water-soluble cationic polymeric substance and (C) a water-soluble polyalkylene glycol or nonionic compound having surface-active ability, and as necessary formulated with an inorganic flocculating agent.

On the other hand, wastewater including surfactants is an example of water that needs to be treated.

JP-A S51-36757 discloses a wastewater flocculation and sedimentation method of adding a flocculating agent to wastewater containing at least one contaminant selected from surfactants, heavy metal substances and dyes to sediment and separate the contaminant comprising, adding an inorganic flocculating agent and 40-200 mesh iron powder or iron alloy powder to the contaminant-containing wastewater, then adjusting the pH of the wastewater to 5 to 9, and thereafter adding a polymeric flocculating agent.

JP-A 2001-96279 discloses a treatment agent for surfactant-containing wastewater comprising, a formaldehyde condensate obtained by condensing a dihydroxydiphenyl sulfone, an aromatic compound having a sulfonic acid group and formaldehyde.

JP-A 2006-7208 discloses a method for treating wastewater that comprises resin particle (A) with a volume average particle size of 0.0005 to 500 $\mu$m, surfactant (B) and/or water-soluble polymer (C), the method comprising a step of adding inorganic flocculating agent (a), a step of adding polymeric flocculating agent (b), and a step of adding organic coagulating agent (c) as necessary.

Summary of the Invention

Wastewater including surfactants is discharged, for example, as water which has been used for washing clothes, dishes or the like from ordinary households. Purification and reuse of water including surfactants is considered to make a significant contribution to effective use of water, but there is a problem that conventional methods have less flocculation effect and offer an unsatisfactory purification effect on wastewater including surfactants.

The present invention provides a water treatment agent and a method for purifying water which are excellent in water purification effect, for example, exhibit an excellent purification effect even on wastewater including surfactants.

The present invention relates to a water treatment agent containing (a) a polyalkylene oxide with a weight average molecular weight of 500,000 or more [hereinafter referred to as component (a)] and (b) an inorganic flocculating agent [hereinafter referred to as component (b)].

Further, the present invention relates to a method for purifying water including, adding components (a) and (b) to water to be treated including water and polluting components.

According to the present invention, provided are a water treatment agent and a method for purifying water which are excellent in water purification effect, for example, exhibit an excellent purification effect such as a high purified-water recovery rate even on wastewater including surfactants.

Embodiments of the Invention

<Water treatment agent>

In the present invention, it is inferred that component (b) flocculates polluting components such as, for example, surfactants, soil or the like to form flocculates, and component (a) intervenes between these flocculates to strengthen bonds between them. It is also inferred that component (a), having an appropriate molecular weight, is entangled with the flocculates to still more strengthen their bonds. It is considered that, as a result, the present invention does not reduce the effect of flocculating polluting components and develops an excellent purification effect even on wastewater including surfactants.

Component (a) is a polyalkylene oxide with a weight average molecular weight of 500,000 or more.

The weight average molecular weight of component (a) is preferably 500,000 or more, more preferably 1,000,000 or more, further preferably 2,000,000 or more, furthermore preferably 4,000,000 or more and furthermore preferably 5,000,000 or more, and preferably 10,000,000 or less and more preferably 8,000,000 or less. The weight average molecular weight of component (a) is calculated from the intrinsic viscosity by the Mark-Houwink equation.

Component (a) is preferably a polyalkylene oxide including ethylene oxide as a polymerization unit.

Component (a) is preferably polyethylene oxide.

Component (a) is preferably a polyalkylene oxide having spinnability and further a polyethylene oxide having spinnability.

In the present disclosure, "spinnability" refers to the so-called "thread-pulling" property, in which stretching characteristics of objects are developed, and for example, the "thread-pulling of natto" or the like is an example of such a property. In one or more embodiments, spinnability refers to the property of a liquid composition forming a continuous thread-like structure without breaking to form droplets when slowly dropped or stretched with one end thereof held, and for example, the "thread-pulling of animal or plant mucus" or the like is an example thereof. Spinnability is one of the elastic relaxation phenomena of liquid compositions and is generally known to be a physical property completely independent of surface tension or viscosity.

The presence or absence of spinnability of component (a) can be determined by the method below. For example, an aqueous solution obtained by dissolving a polyalkylene oxide in purified water to a predetermined concentration (e.g., 10 mass%) is used for the determination by a method in conformance with the following [spinnability determination method], and if the aqueous solution has spinnability, the polyalkylene oxide can be judged as having spinnability.

[Spinnability determination method]

An aqueous solution that pulls a thread when quietly dropped from a pasteur pipette with a tip inner diameter of 1 mm (glass, e.g., ASAHITECHNO GLASS, IK-PAS-5P) can be considered as an aqueous solution that exhibits spinnability in the present disclosure.

Component (a) is preferably a polyalkylene oxide whose aqueous solution with a concentration of 30 g/L or less exhibits spinnability, more preferably a polyalkylene oxide whose aqueous solution with a concentration of 10 g/L or less exhibits spinnability, and further preferably a polyalkylene oxide whose aqueous solution with a concentration of 5 g/L or less exhibits spinnability.

Component (b) is an inorganic flocculating agent.

Examples of component (b) include one or more inorganic flocculating agents selected from aluminum sulfate, sodium aluminate, polyaluminum chloride, aluminum oxide, aluminum hydroxide, iron(II) sulfate, iron(III) chloride, iron(III) sulfate, polyferric sulfate, sodium silicate, sodium sulfite and an aluminum alum.

Component (b) is preferably one or more inorganic flocculating agents selected from aluminum sulfate, polyaluminum chloride, iron(II) sulfate, iron(III) sulfate and polyferric sulfate.

The water treatment agent of the present invention contains component (a) in an amount of preferably 0.1 parts by mass or more, more preferably 0.5 parts by mass or more and further preferably 1 part by mass or more, and preferably 500 parts by mass or less, more preferably 100 parts by mass or less and further preferably 50 parts by mass or less relative to 1,000 parts by mass of component (b) from the viewpoints of the improvement of flocculating performance, and handling.

The water treatment agent of the present invention can contain a surfactant. The surfactant may be a surfactant with a molecular weight of less than 500,000. In the present invention, the use of a surfactant together with components (a) and (b) can further improve the effect of purifying water to be treated, for example, can further improve a purified-water recovery rate.

Examples of the surfactant include one or more surfactants selected from anionic surfactants, nonionic surfactants, cationic surfactants, amphoteric surfactants and a water-soluble polymer with a molecular weight of less than 500,000.

The surfactant is preferably an anionic surfactant. The water treatment agent of the present invention preferably contains an anionic surfactant as a surfactant.

Examples of the anionic surfactant include an anionic surfactant having a hydrocarbon group with 8 or more and 24 or less carbons and a sulfonic acid group or a sulfate group. The sulfonic acid group or sulfate group may form a salt. Examples of the anionic surfactant having a sulfate group include alkyl or alkenyl sulfates and polyoxyalkylene alkyl or alkenyl ether sulfates. Examples of the anionic surfactant having a sulfonic acid group which may form a salt include alkylbenzene sulfonates. Other examples of the anionic surfactant include a fatty acid with 12 or more and 24 or less carbons or a salt thereof.

Examples of the nonionic surfactants include polyoxyalkylene alkyl ether nonionic surfactants.

Examples of the cationic surfactants include quaternary ammonium surfactants or tertiary amine surfactants.

Examples of the amphoteric surfactants are not particularly limited to, but include, for example, an N-alkyl-N,N-dimethylamine oxide having an alkyl group with 8 or more and preferably 10 or more and 18 or less and preferably 16 or less carbons, an N-alkyl carbonyl aminopropyl-N,N-dimethylamine oxide having an alkyl group with a number of carbons falling within the above range, an N-alkyl-N,N-dimethylaminoacetic acid betaine having an alkyl group with a number of carbons falling within the above range, an N-alkyl carbonyl aminopropyl-N,N-dimethylaminoacetic acid betaine having an alkyl group with a number of carbons falling within the above range, an N-alkyl-N,N-dimethyl-N-(2-hydroxysulfopropyl)ammonium sulfobetaine having an alkyl group with a number of carbons falling within the above range and the like.

When the water treatment agent of the present invention contains a surfactant, the agent contains the surfactant in an amount of preferably 50 parts by mass or more, more preferably 100 parts by mass or more, further preferably 150 parts by mass or more, furthermore preferably 200 parts by mass or more and furthermore preferably 300 parts by mass or more, and preferably 10,000 parts by mass or less, preferably 2,000 parts by mass or less, more preferably 1,500 parts by mass or less and further preferably 1,200 parts by mass or less relative to 1,000 parts by mass of component (b) from the viewpoints of the improvement of flocculating performance, and handling.

The water treatment agent of the present invention can contain a water-soluble inorganic compound, a bleaching agent, a bactericide, an antibacterial agent, an antiseptic, a pH adjuster or other components (excluding components (a), (b) and (c) and surfactants) as optional components. The pH adjuster is used to control the pH of water to be treated when the water to be treated is purified with the water treatment agent of the present invention, and examples thereof include alkali agents and acid agents. Examples of the alkali agents include caustic soda, sodium carbonate, sodium bicarbonate, sodium silicate, monoethanolamine or the like, and examples of the acid agents include inorganic acids such as sodium hydrogen sulfate or the like, organic acids such as citric acid, lactic acid or the like, and others.

The water treatment agent of the present invention may be either a powder or liquid form.

The water treatment agent of the present invention may be a multi-agent type water treatment agent including a first agent containing component (a) and a second agent containing component (b). The first agent may be an agent not containing component (b). Further, the second agent may be an agent not containing component (a). The first and/or second agents can be appropriately formulated with optional components, or an agent other than the first and second agents can be formulated with optional components, thereby forming a multi-agent type water treatment agent including three or more agents.

The water treatment agent of the present invention can be suitably used in the method for purifying water of the present invention described below.

<Method for purifying water>

In the method for purifying water of the present invention, components (a) and (b) are added to water to be treated including water and polluting components.

The matters mentioned in the water treatment agent of the present invention can be appropriately applied to the method for purifying water of the present invention. Specific examples, preferable examples or the like of components (a) and (b) are the same as those in the water treatment agent of the present invention.

The polluting components included in the water to be treated may be formed of organic matter, inorganic matter and combinations thereof.

In the present invention, the water to be treated contains as a polluting component, for example, a surfactant. Examples of polluting components other than surfactants include, for example, soil (which means that clay, mud or the like may be included), bacteria, heavy metals and their ions, sebum, lipids, keratin, hair, coloring matters (dyes, pigments or the like), foods, fibers, plastic-based packaging materials, microplastics and others. The polluting components included in the water to be treated may be determined depending on the use of the water after treatment or the like. For example, if the water after treatment is used as domestic wastewater, surfactants, soil or the like in the water to be treated may be polluting components.

The present invention has a further improved water purification effect if components (a) and (b) are used under conditions where a surfactant coexists in the water to be treated. The surfactant may be included in the water to be treated as a polluting component and/or as a separately added component. For example, the water to be treated preferably includes a surfactant together with components (a) and (b) in the present invention. For example, the water to be treated after adding components (a) and (b) preferably includes a surfactant in the present invention. Examples of the surfactant included in the water to be treated include those mentioned in the water treatment agent of the present invention.

When the water to be treated contains a surfactant, the concentration thereof is, for example, 0.1 ppm or more, further 1 ppm or more, further 10 ppm or more and further 50 ppm or more, and 100,000 ppm or less, further 10,000 ppm or less, further 5,000 ppm or less, further 2,000 ppm or less, further 1,000 ppm or less, further 800 ppm or less and further 500 ppm or less. The water to be treated before adding components (a) and (b) may include a surfactant in a concentration falling within this range. Further, a surfactant may be added to the water to be treated including a surfactant or the water to be treaded including no surfactants such that the concentration is adjusted to fall within this range.

The water to be treated to which the present invention is directed may be wastewater discharged from industrial facilities, construction sites, excavation sites, ordinary households or the like, and examples thereof include, for example, wastewater discharged during cleaning processes such as washing of textile products, cleaning of hard articles or the like, and others.

Component (a) is preferably added such that the concentration of component (a) in the water to be treated is 0.1 ppm or more, further 0.5 ppm or more and further 1 ppm or more, and 500 ppm or less, further 100 ppm or less and further 50 ppm or less.

In the present invention, component (a) is added in an amount of preferably 0.1 parts by mass or more, more preferably 0.5 parts by mass or more and further preferably 1 part by mass or more, and preferably 500 parts by mass or less, more preferably 100 parts by mass or less and further preferably 50 parts by mass or less relative to 1,000 parts by mass of component (b) from the viewpoints of the improvement of flocculating performance, and handling.

While the order or form in which components (a) and (b) are added to the water to be treated is arbitrary in the present invention, it is preferable that component (a) be added after component (b). Further, a surfactant or other optional components can also be added to the water to be treated in the present invention. Specific examples of the surfactant, the proportion thereof relative to component (b) or the like may be the same as those in the water treatment agent of the present invention. As mentioned above, a surfactant may be separately added such that the concentration of surfactants in the water to be treated falls within the above range in the present invention.

In the present invention, the water to be treated including components (a) and (b) preferably has a pH of 4 or more and further 5 or more, and 9 or less and further 8.5 or less. In other words, the present invention preferably includes a step of adjusting the pH of the water to be treated to a value falling within the above range. The pH can be adjusted by any of the aforementioned pH adjusters, for example, alkali agents such as caustic soda, sodium carbonate, sodium bicarbonate, sodium silicate, monoethanolamine or the like, acid agents such as sodium hydrogen sulfate or other inorganic acids, citric acid, lactic acid or other organic acids, or the like.

In the method for purifying water of the present invention, the water treatment agent of the present invention can be used to add components (a) and (b) to the water to be treated.

The following aspects of the present invention are described by way of example. The matters mentioned in the water treatment agent and method for purifying water of the present invention can be appropriately applied to these aspects.

<1> A water treatment agent containing (a) a polyalkylene oxide with a weight average molecular weight of 500,000 or more [hereinafter referred to as component (a)] and (b) an inorganic flocculating agent [hereinafter referred to as component (b)].

<2> The water treatment agent according to <1>, wherein component (a) is a polyalkylene oxide including ethylene oxide as a polymerization unit.

<3> The water treatment agent according to <1> or <2>, wherein component (a) is polyethylene oxide.

<4> The water treatment agent according to any of <1> to <3>, wherein component (a) is a polyalkylene oxide having spinnability and further a polyethylene oxide having spinnability.

<5> The water treatment agent according to any of <1> to <4>, wherein component (a) is a polyalkylene oxide whose aqueous solution with a concentration of 30 g/L or less exhibits spinnability, preferably a polyalkylene oxide whose aqueous solution with a concentration of 10 g/L or less exhibits spinnability, and more preferably a polyalkylene oxide whose aqueous solution with a concentration of 5 g/L or less exhibits spinnability.

<6> The water treatment agent according to any of <1> to <5>, wherein the weight average molecular weight of component (a) is 500,000 or more, preferably 1,000,000 or more, more preferably 2,000,000 or more, further preferably 4,000,000 or more and furthermore preferably 5,000,000 or more, and 10,000,000 or less and preferably 8,000,000 or less.

<7> The water treatment agent according to any of <1> to <6>, wherein component (b) is one or more inorganic flocculating agents selected from aluminum sulfate, sodium aluminate, polyaluminum chloride, aluminum oxide, aluminum hydroxide, iron(II) sulfate, iron(III) chloride, iron(III) sulfate, polyferric sulfate, sodium silicate, sodium sulfite and an aluminum alum.

<8> The water treatment agent according to any of <1> to <7>, wherein component (b) is one or more inorganic flocculating agents selected from aluminum sulfate, polyaluminum chloride, iron(II) sulfate, iron(III) sulfate and polyferric sulfate.

<9> The water treatment agent according to any of <1> to <8>, wherein the agent contains component (a) in an amount of 0.1 parts by mass or more, preferably 0.5 parts by mass or more and more preferably 1 part by mass or more, and 500 parts by mass or less, preferably 100 parts by mass or less and more preferably 50 parts by mass or less relative to 1,000 parts by mass of component (b).

<10> The water treatment agent according to any of <1> to <9>, wherein the agent further contains a surfactant.

<11> The water treatment agent according to <10>, wherein the surfactant is one or more surfactants selected from anionic surfactants, nonionic surfactants, cationic surfactants, amphoteric surfactants and a water-soluble polymer with a molecular weight of less than 500,000.

<12> The water treatment agent according to <10> or <11>, wherein the surfactant is an anionic surfactant.

<13> The water treatment agent according to any of <1> to <12>, wherein the agent contains a surfactant in an amount of 50 parts by mass or more, preferably 100 parts by mass or more, more preferably 150 parts by mass or more, further preferably 200 parts by mass or more and furthermore preferably 300 parts by mass or more, and 10,000 parts by mass or less, preferably 2,000 parts by mass or less, more preferably 1,500 parts by mass or less and further preferably 1,200 parts by mass or less relative to 1,000 parts by mass of component (b).

<14> The water treatment agent according to any of <1> to <13>, wherein the agent is of a multi-agent type including a first agent containing component (a) and a second agent containing component (b).

<15> A method for purifying water including, adding (a) a polyalkylene oxide with a weight average molecular weight of 500,000 or more [hereinafter referred to as component (a)] and (b) an inorganic flocculating agent [hereinafter referred to as component (b)] to water to be treated including water and polluting components.

<16> The method for purifying water according to <15>, wherein component (a) is added such that a concentration of component (a) in the water to be treated is 0.1 ppm or more, further 0.5 ppm or more and further 1 ppm or more, and 500 ppm or less, further 100 ppm or less and further 50 ppm or less.

<17> The method for purifying water according to <15> or <16>, wherein the water to be treated includes a surfactant together with components (a) and (b).

<18> The method for purifying water according to <17>, wherein a concentration of the surfactant in the water to be treated is 0.1 ppm or more, further 1 ppm or more, further 10 ppm or more and further 50 ppm or more, and 100,000 ppm or less, further 10,000 ppm or less, further 5,000 ppm or less, further 2,000 ppm or less, further 1,000 ppm or less, further 800 ppm or less and further 500 ppm or less.

<19> The method for purifying water according to any of <15> to <18>, wherein component (a) is added in an amount of 0.1 parts by mass or more, preferably 0.5 parts by mass or more and more preferably 1 part by mass or more, and 500 parts by mass or less, preferably 100 parts by mass or less and more preferably 50 parts by mass or less relative to 1,000 parts by mass of component (b).

<20> The method for purifying water according to any of <15> to <19>, wherein the water to be treated including components (a) and (b) has a pH of 4 or more and further 5 or more, and 9 or less and further 8.5 or less.

<21> The method for purifying water according to any of <15> to <20>, wherein the water treatment agent according to any of <1> to <14> is used to add components (a) and (b) .

Examples

(1) Method for preparing polluted water

475 g of ion exchange water was placed in a 500-ml glass beaker. A cylindrical stirrer with a diameter of 11 mm and a length of 43 mm was placed therein, and the water was stirred for 1 minute on a magnetic stirrer (NISSIN stirrer SW-M120) with the scale set to 4. 0.5 g of soil (Kanuma soil which was ground in a mixer of Hosokawa Micron Co., Ltd.) was added and stirred for 30 seconds. In the evaluation described below, the amount of polluted water after adding component (a) or the like (also referred to as polluted water for evaluation) was adjusted to be 500 g (about 500 ml). Taking this into account, any of the following surfactants was added such that the concentration in 500 g of the polluted water for evaluation was a value shown in Table 1 or 2, and stirred for 30 seconds to prepare polluted water as water to be treated.

* Surfactant

LAS: sodium lauryl benzene sulfonate, NEOPELEX G-15 (manufactured by Kao Corporation)
AS: sodium lauryl sulfate, EMAL 10G (manufactured by Kao Corporation)
AES: sodium polyoxyethylene lauryl ether sulfate, EMAL 270J (manufactured by Kao Corporation)
Sodium oleate: FUJIFILM Wako Pure Chemical Corporation
Polyoxyethylene lauryl ether: EMULGEN 108 (manufactured by Kao Corporation)

(2) Evaluation

The prepared polluted water was used as water to be treated to evaluate a water purification effect.

The polluted water was set on the magnetic stirrer (NISSIN stirrer SW-M120), and while stirring it with the scale set to 4, component (b) was added such that the concentration in the polluted water for evaluation was a value shown in Table 1 or 2, and 30 seconds later, sodium hydroxide was added to adjust the pH to 7. Further 30 seconds later, an aqueous solution prepared in advance from ion exchange water to contain component (a) or (a') in a concentration of 1,000 ppm was added such that the concentration of component (a) or (a') in the polluted water for evaluation was a value shown in Table 1 or 2, and ion exchange water was finally added such that the total liquid volume was 500 g and stirred for 300 seconds in total to obtain the polluted water for evaluation. After stirring, it was left for 1 hour in a room whose temperature was adjusted to 25°C. The polluted water for evaluation underwent decantation into a separately prepared 500-ml glass beaker so as to prevent flocculates from entering. The amount of water which could be recovered at that time was taken as N g, and a water recovery rate was calculated by the following formula. The results are shown in Tables 1 and 2. The larger the water recovery rate value is, the superior the water purification effect is.

$$\text{Water recovery rate } (\%) = N/500 \times 100$$

[Table 1]

| | | | Example | | | | | | | | | | | | Comparative example | | | | |
|---|---|---|---|---|---|---|---|---|---|---|---|---|---|---|---|---|---|---|---|---|
| | | | 1-1 | 1-2 | 1-3 | 1-4 | 1-5 | 1-6 | 1-7 | 1-8 | 1-9 | 1-10 | 1-11 | 1-12 | 1-1 | 1-2 | 1-3 | 1-4 | 1-5 |
| Concentration in polluted water for evaluation (ppm) | Polluting component | Surfactant LAS | 200 | 200 | 200 | 200 | 200 | 200 | 200 | 200 | 200 | 200 | 200 | 200 | 200 | 200 | 200 | 200 | 200 |
| | | Mud | 1000 | 1000 | 1000 | 1000 | 1000 | 1000 | 1000 | 1000 | 1000 | 1000 | 1000 | 1000 | 1000 | 1000 | 1000 | 1000 | 1000 |
| | Water treatment agent | (a) PEO (7,000,000) | | 10 | 1 | 20 | | | | 10 | 10 | 10 | 10 | 10 | | | | 10 | |
| | | PEO (4,500,000) | | | | | 10 | | | | | | | | | | | | |
| | | PEO (2,000,000) | | | | | | 10 | | | | | | | | | | | |
| | | PEO (500,000) | | | | | | | 10 | | | | | | | | | | |
| | | PEO (300,000) | 10 | | | | | | | | | | | | | | | | |
| | | (a') AAm (5,000,000) | | | | | | | | | | | | | 10 | | | | |
| | | Crosslinked AA | | | | | | | | | | | | | | 10 | 10 | | |
| | | (b) Aluminum sulfate | 1000 | 1000 | 1000 | 1000 | 1000 | 1000 | 1000 | 100 | 10000 | | | | 1000 | 1000 | 1000 | | 1000 |
| | | Ferric sulfate | | | | | | | | | | 1000 | | | | | | | |
| | | Polyaluminum chloride | | | | | | | | | | | 1000 | | | | | | |
| | | Polyferric sulfate | | | | | | | | | | | | 1000 | | | | | |
| pH of polluted water for evaluation *1 | | | 7 | 7 | 7 | 7 | 7 | 7 | 7 | 7 | 7 | 7 | 7 | 7 | 7 | 7 | 7 | 7 | 7 |
| Water recovery rate (%) | | | 87 | 98 | 91 | 99 | 95 | 93 | 91 | 90 | 99 | 95 | 96 | 94 | 82 | 83 | 80 | 0 | 71 |

*1 adjusted with sodium hydroxide

[Table 2]

| | | | | Example | | | | | | |
|---|---|---|---|---|---|---|---|---|---|---|
| | | | | 2-1 | 2-2 | 2-3 | 2-4 | 2-5 | 2-6 | 2-7 |
| Concentration in polluted water for evaluation (ppm) | Polluting component | Surfactant | LAS | 200 | 100 | 1000 | | | | |
| | | | AS | | | | 200 | | | |
| | | | AES | | | | | 200 | | |
| | | | Sodium oleate | | | | | | 200 | |
| | | | Polyoxyethylene lauryl ether | | | | | | | 200 |
| | | | Mud | 1000 | 1000 | 1000 | 1000 | 1000 | 1000 | 1000 |
| | Water treatment agent | (a) | PEO (7,000,000) | 10 | 10 | 10 | 10 | 10 | 10 | 10 |
| | | (b) | Aluminum sulfate | 1000 | 1000 | 1000 | 1000 | 1000 | 1000 | 1000 |
| pH of polluted water at treatment *1 | | | | 7 | 7 | 7 | 7 | 7 | 7 | 7 |
| Water recovery rate (%) | | | | 98 | 98 | 90 | 96 | 95 | 95 | 91 |

*1 adjusted with sodium hydroxide

Components in the tables are the following. Weight average molecular weights of components (a) and (a') are shown in parentheses.

Component (a)

• PEO (7,000,000): polyethylene oxide, PEO-27, Sumitomo Seika Chemicals Company, Limited, spinnability
• PEO (4,500,000): polyethylene oxide, PEO-18, Sumitomo Seika Chemicals Company, Limited, spinnability
• PEO (2,000,000): Polyethylene Glycol 2,000,000, FUJIFILM Wako Pure Chemical Corporation
• PEO (500,000): polyethylene oxide, PEO-2, Sumitomo Seika Chemicals Company, Limited, spinnability Component (a')
• PEO (300,000): polyethylene oxide, PEO-1, Sumitomo Seika Chemicals Company, Limited
• AAm (5,000,000): polyacrylamide, FUJIFILM Wako Pure Chemical Corporation
• Crosslinked AA: CARBOPOL 940, The Lubrizol Corporation Component (b)
• Aluminum sulfate: aluminum sulfate (anhydrous), TAIMEI CHEMICALS CO., LTD.
• Ferric sulfate: iron(III) sulfate (anhydrous), FUJIFILM Wako Pure Chemical Corporation
• Polyaluminum chloride: polyaluminum chloride, TAIMEI

CHEMICALS CO., LTD.

• Polyferric sulfate: polyferric sulfate, TAIKI CHEMICAL INDUSTRIES CO., LTD.

pH adjuster

• Sodium hydroxide: FUJIFILM Wako Pure Chemical Corporation

**Claims**

1. A water treatment agent comprising (a) a polyalkylene oxide with a weight average molecular weight of 500,000 or more [hereinafter referred to as component (a)] and (b) an inorganic flocculating agent [hereinafter referred to as component (b)].

2. The water treatment agent according to claim 1, wherein the component (a) is a polyethylene oxide having spinnability.

3. The water treatment agent according to claim 1 or 2, wherein the component (b) is one or more inorganic flocculating agents selected from aluminum sulfate, sodium aluminate, polyaluminum chloride, aluminum oxide, aluminum hydroxide, iron(II) sulfate, iron(III) chloride, iron(III) sulfate, polyferric sulfate, sodium silicate, sodium sulfite and an aluminum alum.

4. The water treatment agent according to any one of claims 1 to 3, wherein the agent comprises the component (a) in an amount of 0.1 parts by mass or more and 500 parts by mass or less relative to 1,000 parts by mass of the component (b).

5. The water treatment agent according to any one of claims 1 to 4, wherein the agent further comprises a surfactant.

6. The water treatment agent according to any one of claims 1 to 5, wherein the agent is of a multi-agent type including a first agent comprising the component (a) and a second agent comprising the component (b).

7. A method for purifying water comprising, adding (a) a polyalkylene oxide with a weight average molecular weight of 500,000 or more [hereinafter referred to as component (a)] and (b) an inorganic flocculating agent [hereinafter referred to as component (b)] to water to be treated comprising water and polluting components.

8. The method for purifying water according to claim 7, wherein the component (a) is added such that a concentration of the component (a) in the water to be treated is 0.1 ppm or more and 500 ppm or less.

9. The method for purifying water according to claim 7 or 8, wherein the water to be treated comprises a surfactant together with the components (a) and (b).

10. The method for purifying water according to claim 9, wherein a concentration of the surfactant in the water to be treated is 0.1 ppm or more and 100,000 ppm or less.

11. The method for purifying water according to any one of claims 7 to 10, wherein the water treatment agent according to any one of claims 1 to 6 is used to add the components (a) and (b).

## INTERNATIONAL SEARCH REPORT

| International application No. |
| --- |
| PCT/JP2021/002737 |

| A. CLASSIFICATION OF SUBJECT MATTER |
| --- |
| B01D 21/01(2006.01)i; C02F 1/52(2006.01)i; C02F 1/56(2006.01)i |
| FI: B01D21/01 108; B01D21/01 101A; C02F1/52 Z; C02F1/56 Z |

According to International Patent Classification (IPC) or to both national classification and IPC

| B. FIELDS SEARCHED |
| --- |

Minimum documentation searched (classification system followed by classification symbols)
B01D21/01; C02F1/52; C02F1/56

| Documentation searched other than minimum documentation to the extent that such documents are included in the fields searched | |
| --- | --- |
| Published examined utility model applications of Japan | 1922–1996 |
| Published unexamined utility model applications of Japan | 1971–2021 |
| Registered utility model specifications of Japan | 1996–2021 |
| Published registered utility model applications of Japan | 1994–2021 |

Electronic data base consulted during the international search (name of data base and, where practicable, search terms used)

| C. DOCUMENTS CONSIDERED TO BE RELEVANT | | |
| --- | --- | --- |
| Category* | Citation of document, with indication, where appropriate, of the relevant passages | Relevant to claim No. |
| Y | JP 2019-141801 A (ORGANO CORP.) 29 August 2019 (2019-08-29) paragraphs [0023]-[0080], [0086], fig. 1 | 1-4, 6-11 |
| A | paragraphs [0023]-[0080], [0086], fig. 1 | 5 |
| Y | JP 2016-83611 A (KURITA WATER INDUSTRIES LTD.) 19 May 2016 (2016-05-19) paragraphs [0025]-[0051], fig. 1 | 1-4, 6-11 |
| A | paragraphs [0025]-[0051], fig. 1 | 5 |
| Y | JP 2011-50899 A (FUJI XEROX CO., LTD.) 17 March 2011 (2011-03-17) paragraph [0039] | 1-4, 6-11 |
| A | paragraph [0039] | 5 |
| A | JP 2003-321523 A (TOAGOSEI CO., LTD.) 14 November 2003 (2003-11-14) paragraph [0051] | 1-11 |

| ☐ Further documents are listed in the continuation of Box C. | ☒ See patent family annex. |
| --- | --- |

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| 29 March 2021 (29.03.2021) | 06 April 2021 (06.04.2021) |

| Name and mailing address of the ISA/ | Authorized officer |
| --- | --- |
| Japan Patent Office 3-4-3, Kasumigaseki, Chiyoda-ku, Tokyo 100-8915, Japan | |
| | Telephone No. |

Form PCT/ISA/210 (second sheet) (January 2015)

**INTERNATIONAL SEARCH REPORT**
Information on patent family members

International application No.

PCT/JP2021/002737

| Patent Documents referred in the Report | Publication Date | Patent Family | Publication Date |
|---|---|---|---|
| JP 2019-141801 A | 29 Aug. 2019 | (Family: none) | |
| JP 2016-83611 A | 19 May 2016 | WO 2016/063852 A1 | |
| JP 2011-50899 A | 17 Mar. 2011 | (Family: none) | |
| JP 2003-321523 A | 14 Nov. 2003 | US 2005/0230319 A1 paragraph [0070] | |

Form PCT/ISA/210 (patent family annex) (January 2015)

**EP 4 098 341 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP S48102080 A
- JP S51148967 A
- JP S5621609 A
- JP S5136757 A
- JP 2001096279 A
- JP 2006007208 A